# NEUE EUROPÄISCHE PATENTSCHRIFT

(11) **EP 2 047 734 B2**
(45) Veröffentlichungstag und Bekanntmachung des Hinweises auf die Entscheidung über den Einspruch: **31.01.2018**
(45) Hinweis auf die Patenterteilung: 10.09.2014
(21) Anmeldenummer: 08013578.3
(22) Anmeldetag: 29.07.2008
(51) Int. Cl.: A01C 7/20, A01B 63/32

(54) **Säschar mit hydraulischer Schardruckverstellung**
Seed drill coulter with hydraulic gathering pressure adjustment
Semeuse dotée d'un réglage de pression du soc hydraulique

(30) Priorität: 12.10.2007 DE 202007014375 U
(43) Veröffentlichungstag der Anmeldung: 15.04.2009
(73) Patentinhaber: Lemken GmbH & Co. KG, 46519 Alpen (DE)
(72) Erfinder: Gebbeken, Martin, 46519 Alpen (DE); Werries, Dieter, 46519 Alpen (DE); Paeßens, Christian, 47661 Issum (DE); Lukas, Thomas, 48683 Ahaus Wüllen (DE)
(74) Vertreter: Schulte & Schulte

(56) Entgegenhaltungen:
- EP-A- 1 290 932
- GB-A- 2 127 263
- US-A- 5 065 681

## Beschreibung

Die Erfindung betrifft Säschare für eine Drillmaschine, bei denen der Schardruck der Säschare auf den Boden durch einen oder mehrere Energiespeicher unterstützt wird, wobei die Säschare im Wesentlichen in horizontaler Richtung schwenkbar mittels Tragarmen mit dem Scharrahmen der Drillmaschine verbunden sind.

Derartige Drillmaschinen sind mit einer Vielzahl von Säscharen ausgerüstet. Dabei gilt es, Druck auf die Säschare auszuüben, um eine Rille mit ausreichender und möglichst gleich bleibender Tiefe für die Ablage des Saatgutes zu erzeugen. Die Ablagetiefe wird in einfachster Form über den Schardruck eingestellt, der bei wechselnden Bodenverhältnissen entsprechend angepasst werden muss. Der Schardruck wird dabei über Energiespeicher, z.B. Federn oder unter Druck stehenden Hydraulikzylindern erzeugt. Für einen gleichen Schardruck für alle Säschare eignen sich insbesondere Hydraulikzylinder, die kommunizierend miteinander verbunden sind. Bei schnellen und stoßartigen Bewegungen der Säschare ist das kommunizierende Hydrauliksystem aber nicht in der Lage, für einen gleichen Schardruck der einzelnen Säschare zu sorgen. Das Öl kann nicht schnell genug ohne nennenswerte Druckschwankungen über die Verbindungsleitungen hin- und her fließen, weil die Leitungen zwischen den kommunizierenden Hydraulikzylindern dies grundsätzlich nicht zulassen.

Damit stellt sich die vorliegende Erfindung die Aufgabe, Säschare für Drillmaschinen mit hydraulischem Energiespeicher als Schardrucksystem zu schaffen, das einen gleichen Schardruck für alle Säschare sicherstellt und auch ein besonders schnelles und präzises Ausweichen bei Bodenunebenheiten ermöglichen, ohne dass sich der Systemdruck des hydraulischen Energiespeichers nennenswert erhöht und das auch sicherstellt, dass alle im System befindlichen Säschare möglichst mit dem gleichen Schardruck beaufschlagt werden:

Diese Aufgabe wird dadurch gelöst, dass zur Ausübung des Schardruckes für mehrere Säschare ein hydraulischer Energiespeicher dient, mit einem Kolbenraum und mindestens drei Kolbenstangenführungen und in den Kolbenraum hineinragenden Kolbenstangen.

Die Drillmaschine weist dabei einen oder bei großer Arbeitsbreite mehrere besonders kompakte hydraulische Energiespeicher auf, mit jeweils einem Kolbenraum, dem mehrere Kolbenstangenführungen und Kolbenstangen zugeordnet sind. Da nur ein Kolbenraum mit Hydraulikflüssigkeit für mehrere Kolbenstangen vorgesehen ist, ist ein deutlich verbesserter Druckausgleich bzw. ein gleicher Systemdruck für alle Kolbenstangen sichergestellt. Dies sichert gleichzeitig auch einen gleichen Schardruck für alle betroffenen Säschare. Da alle Kolbenstangen in den gleichen Kolbenraum hineinragen und keine Leitungen vorgesehen sind, die zu Engpässen im Hydrauliksystem führen können, ist auf einfache Weise ein hydraulisches Schardrucksystem geschaffen, das in allen Einsatzsituationen für einen gleichmäßigen Schardruck für alle Säschare sorgt.

Bei einer bevorzugten Ausführungsform ist dabei daran gedacht, dass der Kolbenraum durch ein Querrohr gebildet wird, das Bestandteil der Drillmaschine oder des Scharrahmens ist. Das Querrohr mit den Kolbenstangenführungen weist in seinem Innenraum den Kolbenraum auf. Alle Kolbenstangen ragen in diesen Kolbenraum hinein und werden daher mit dem gleichen Öldruck beaufschlagt.

Ergänzend hierzu ist vorgesehen, dass das Querrohr ein- oder mehrteilig ausgebildet und Bestandteil des Rahmens der Drillmaschine oder des Scharrahmens der Drillmaschine ist. Denkbar sind abhängig von der Arbeitsbreite der Drillmaschine und der Funktion des Querrohres Ausführungsformen mit nur einem Querrohr oder mit mehreren Querrohren, die vorzugsweise aneinander geflanscht sind. In allen Fällen weist jedes Querrohr mehrere Kolbenstangenführungen mit Kolbenstangen auf.

Diesbezüglich ist vorgesehen, dass der Innenraum des Querrohres mit Öl gefüllt und mit Druck beaufschlagt ist, um die angesprochene Druckwirkung auf die Kolbenstangen zu gewährleisten. Auf diese Weise ist Sorge getragen, dass auf alle Schare ein gleichmäßiger Schardruck ausgeübt wird.

Außerdem ist vorgesehen, dass das Querrohr eine Vielzahl von nebeneinander angeordneten Kolbenstangenführungen für die Aufnahme von Kolbenstangen aufweist. An der Unterseite des Querrohres befinden sich die einzelnen Kolbenstangenführungen und Kolbenstangen in einem Abstand nebeneinander, der dem Abstand der einzelnen Säschare zueinander entspricht. Die Kolbenstangen sind jeweils auf den Tragarm des Säschares gerichtet. Die Kraftrichtung der Kolbenstange und die Gelenkverbindung zwischen Kolbenstange bzw. Stößel und Tragarm des Säschares ist so gewählt, dass das jeweils zugehörige Säschar mit dem gleichem Schardruck beaufschlagt wird wie die benachbarten Säschare. Bei Drillmaschinen mit zum Beispiel zwei hintereinander angeordneten Reihen von Säscharen sind die jeweiligen Kolbenstangenführungen mit Kolbenstangen entsprechend am Querrohr vorgesehen.

Eine weitere vorteilhafte Ausführungsform der Erfindung sieht vor, dass der Öldruck im Querrohr einstellbar ist, um den Schardruck den Gegebenheiten entsprechend anpassen zu können.

Die Erfindung zeichnet sich insbesondere dadurch aus, dass Säschare für Drillmaschinen geschaffen sind, bei denen der Druck der Säschare auf den Boden in besonders geeigneter Form ausgeübt werden kann. Hierzu dient für mehrere Säschare ein hydraulischer Energiespeicher mit einem Kolbenraum und mehreren Kolbenstangen, über den ein gleicher und konstanter Druck auf alle Schare ausgeübt wird. Ein einzelner Kolbenraum im Innenraum des Querrohrs ersetzt dabei eine Vielzahl einzelner Kolbenräume. Dies reduziert auch spürbar die Herstellkosten einer entsprechenden Drillmaschine.

Weitere Einzelheiten und Vorteile des Gegenstandes der Erfindung ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Figur 1: eine Seitenansicht des Säschares mit Tiefenführungsrolle,
- Figur 2: ein Querrohr in Draufsicht und
- Figur 3: ein Querrohr im Schnitt.

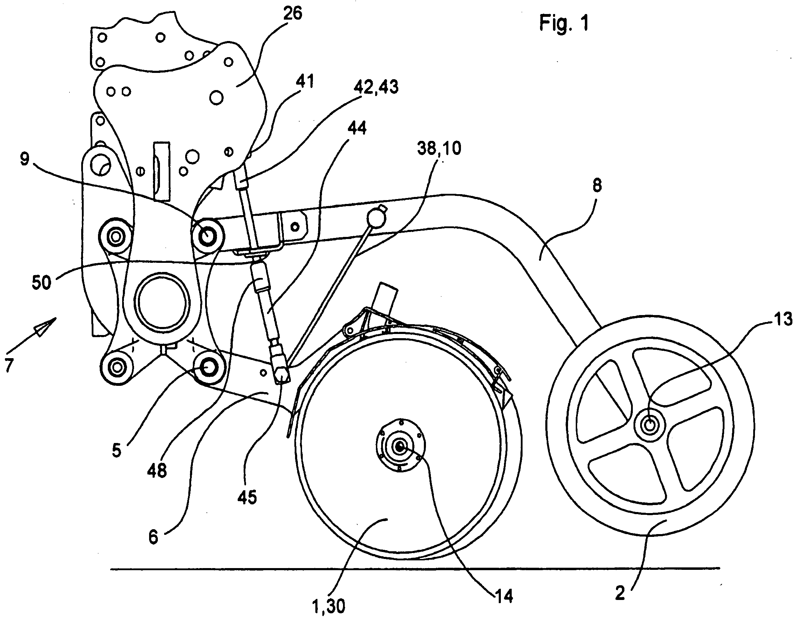

Figur 1 zeigt eine Seitenansicht des Säschares 1 mit Tiefenführungsrolle 2 einer nicht dargestellten Drillmaschine. Das Säschar 1 ist als Doppelscheibenschar 30 ausgebildet. Das Doppelscheibenschar 30 ist dem Tragarm 6 zugeordnet und um die quer angeordnete Schwenkachse 5 des Scharrahmens 7 schwenkbar. Die Tiefenführungsrolle 2 ist dem Schwenkarm 8 zugeordnet und um die Querachse 9 schwenkbar gelagert. Zwischen dem Tragarm 6 und dem Schwenkarm 8 ist ein Seil 38 als Verbindungslenker 10 positioniert. Das Seil 38 führt das Säschar 1 in seiner Ablagetiefe in Abhängigkeit von der Position der Tiefenführungsrolle 2. Mit dem Tragarm 6 ist im Abstand zur Schwenkachse 5 ein Stößel 44 über die Gelenkverbindung 45 verbunden. Der Stößel 44 wird mit der Druckkraft der Kolbenstange 42 belastet und überträgt diese Druckkraft auf den Tragarm des Säschares. Die Kolbenstange 42 ist in der Kolbenstangenführung 41 geführt, die Bestandteil eines nicht sichtbaren Querrohres 4 des Scharrahmens 7 ist. Das Querrohr 4 befindet sich hinter der Rahmenplatte 26 des Scharrahmens 7 und ist mit seinen Flanschplatten 11 mit der Rahmenplatte 26 verbunden. Das Säschar 1 ist im Wesentlichen in vertikaler Richtung schwenkbar mittels des Tragarms 6 mit dem Scharrahmen 7 der Drillmaschine verbunden. In der Mitte des Stößels 44 befindet sich ein Puffer 48, Puffer 48, der sich bei großen Schwenkbewegungen des Säschares 1 gegen den Anschlag 50 des Schwenkarms 8 abstützt und so als Stoßdämpfer dient.

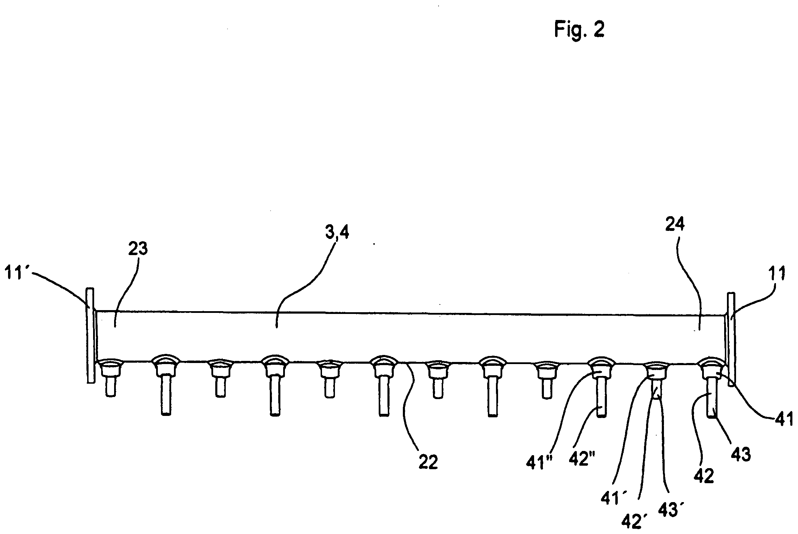

In Figur 2 ist der hydraulische Energiespeicher 3 in Form des Querrohres 4 dargestellt. An der Unterseite 22 dieses Querrohres 4 befindet sich eine Vielzahl von Kolbenstangenführungen 41, 41' und 41". Jede Kolbenstangenführung nimmt eine Kolbenstange 42, 42' und 42"auf. Die Kolbenstangen 42, 42' und 42" sind als Plungerkolben 43, bzw. 43' ausgebildet. An den Enden 23, 24 des Querrohres 4 befinden sich Flansche 11 und 11', über die das Querrohr mit den Rahmenplatten 26 des Scharrahmens 7 verbunden wird. Die Flansche 11 und 11' dienen auch zum Verbinden mehrerer Querrohre 4 zu einer größeren Querrohreinheit.

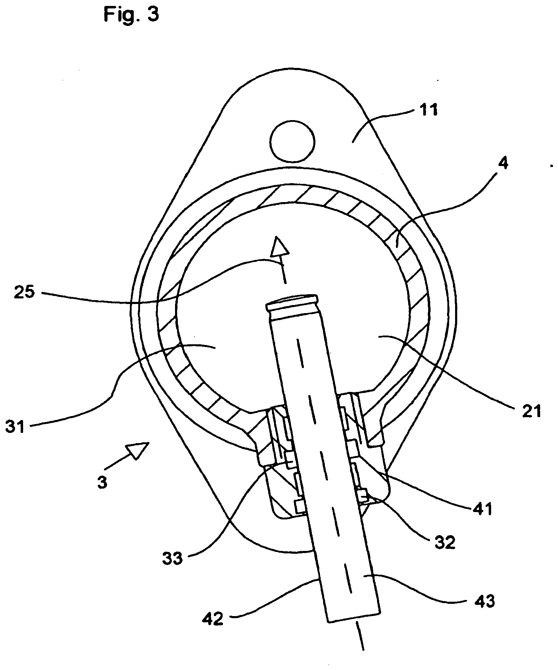

Die Funktion des Energiespeichers 3 ist in Figur 3 besonders gut erläutert. Diese zeigt einen Querschnitt durch das Querrohr 4 mit Blick auf den Flansch 11. Im Kolbenraum 21 bzw. Innenraum 31 des Querrohres 4 befindet sich die Hydraulikflüssigkeit, vorzugsweise Öl. Verschiebt sich eine Kolbenstange 42 aufgrund der Beanspruchung durch eine Bodenunebenheit in Pfeilrichtung 25 in den Kolbenraum 21 hinein, so wird Öl verdrängt. Das verdrängte Öl verteilt sich auf die anderen Kolbenstangen 42 und sorgt so für eine gleiche Verteilung des verdrängten Öls. So wird sichergestellt, dass alle Säschare 1 über die Kolbenstangen 42 mit dem gleichen Schardruck beaufschlagt werden. Über Puffer 48 wird verhindert, dass die Kolbenstangen 42 zu weit in den Innenraum 31 des Querrohres 4 hinein geschoben werden. Die in den Kolbenstangenführungen 41 geführten Kolbenstangen 42 sind über Dichtungen 32, 33 abgedichtet.

## Patentansprüche

1. Säschare (1) für Drillmaschinen, bei denen der Druck der Säschare (1) durch einen oder mehrere Energiespeicher unterstützt wird, wobei die Säschare (1) im Wesentlichen in vertikaler Richtung schwenkbar mittels Tragarmen (6) mit dem Scharrahmen (7) der Drillmaschine verbunden sind,
**dadurch gekennzeichnet,**
**dass** zur Ausübung des Schardruckes für mehrere Säschare (1) ein hydraulischer Energiespeicher (3) dient, mit einem Kolbenraum (21) und mindestens drei Kolbenstangenführungen (41) und in den Kolbenraum (21) hineinragenden Kolbenstangen (42).

2. Säschare nach Anspruch 1,
**dadurch gekennzeichnet,**
**dass** der Kolbenraum (21) durch ein Querrohr (4) gebildet wird, das Bestandteil der Drillmaschine oder des Scharrahmens (7) ist.

3. Säschare nach Anspruch 1 und 2,
**dadurch gekennzeichnet,**
**dass** das Querrohr (4) ein- oder mehrteilig ausgebildet und Bestandteil der Drillmaschine oder des Scharrahmens der Drillmaschine ist.

4. Säschare nach Anspruch 1 bis 3,
**dadurch gekennzeichnet,**
**dass** der Innenraum (31) des Querrohres (4) mit Öl gefüllt und mit Druck beaufschlagt ist.

5. Säschare nach Anspruch 1 bis 4,
**dadurch gekennzeichnet,**
**dass** das Querrohr (4) eine Vielzahl von nebeneinander angeordneten Kolbenstangenführungen (41) für die Aufnahme von Kolbenstangen (42) aufweist.

6. Säschare nach Anspruch 1 bis 5,
**dadurch gekennzeichnet,**
**dass** der Öldruck im Querrohr (4) einstellbar ist.

## Claims

1. Drill coulters (1) for seed drills, in which the pressure of the drill coulters (1) is supported by one or more energy storage devices, whereby the drill coulters (1) are basically connected with the coulter frame (7) of the seed drill by means of supporting arms (6) swivellable in a vertical direction,
**characterised by the fact**
that a hydraulic energy storage device (3) with a piston chamber (21) and at least three piston rod guides (41) and piston rods (42) extending into the piston chamber (21) are used to provide the coulter pressure for several drill coulters (1).

2. Drill coulters in accordance with Claim 1,
**characterised by the fact**
that the piston chamber (21) is formed by a transverse pipe (4) that is a component of the seed drill or of the coulter frame (7).

3. Drill coulters in accordance with Claim 1 and 2,
**characterised by the fact**
that the transverse pipe (4) is formed in one or multiple parts and is a component of the seed drill or of the coulter frame of the seed drill.

4. Drill coulters in accordance with Claim 1 to 3,
**characterised by the fact**
that the interior (31) of the transverse pipe (4) is filled with oil and that pressure is applied to it.

5. Drill coulters in accordance with Claim 1 to 4,
**characterised by the fact**
that the transverse pipe (4) has a number of piston rod guides (41) for holding piston rods (42) arranged side by side.

6. Drill coulters in accordance with Claim 1 to 5,
**characterised by the fact**
that the oil pressure in the transverse pipe (4) is adjustable.

## Revendications

1. Socs de semoir (1) pour semeuses, pour lesquels la pression des socs de semoir (1) est soutenue par un ou plusieurs réservoirs d'énergie, sachant que les socs de semoir (1) sont reliés pour l'essentiel, de façon pivotable dans le sens vertical au moyen de bras porteurs (6), avec le cadre de soc (7) de la semeuse,
**caractérisé par le fait**
**qu'**un réservoir d'énergie (3) sert à exercer la pression du soc pour plusieurs socs de semoir (1), avec un espace de piston (21) et au moins trois guidages de tige de piston (41) et tiges de piston (42) s'étendant dans l'espace de piston (21).

2. Socs de semoir selon la revendication 1,
**que** l'espace de piston (21) est formé par un tuyau transversal (4), qui est un composant de la semeuse ou du cadre de soc (7).

3. Socs de semoir selon la revendication 1 et 2,
**caractérisé par le fait**
**que** le tuyau transversal (4) consiste en une ou plusieurs pièces et est un composant de la semeuse ou du cadre de soc de la semeuse.

4. Socs de semoir selon la revendication 1 à 3,
**caractérisé par le fait**
**que** l'espace intérieur (31) du tuyau transversal (4) est rempli d'huile et est mis sous pression.

5. Socs de semoir selon la revendication 1 à 4,
**caractérisé par le fait**
**que** le tuyau transversal (4) présente un grand nombre de guidages de tige de piston (41) disposés les uns à côté des autres pour la réception de tiges de piston (42).

6. Socs de semoir selon la revendication 1 à 5,
**caractérisé par le fait**
**que** la pression de l'huile dans le tuyau transversal (4) peut être réglée.
